Europäisches Patentamt

European Patent Office

Office européen des brevets

(11) Numéro de publication: **0 161 378**
A1

# DEMANDE DE BREVET EUROPEEN

(21) Numéro de dépôt: **84830150.3**

(22) Date de dépôt: **16.05.84**

(51) Int. Cl.⁴: **G 01 V 1/18**

(43) Date de publication de la demande: **21.11.85**
**Bulletin 85/47**

(71) Demandeur: **Sagripanti, Marino, Via S. D'Acquisto, 1,
I-62017 Porto Recanati (MC) (IT)**

(84) Etats contractants désignés: **AT BE CH DE FR GB IT LI
LU NL SE**

(72) Inventeur: **Sagripanti, Marino, Via S. D'Acquisto, 1,
I-62017 Porto Recanati (MC) (IT)**

(54) **Dispositif d'alarme et signalisation de tremblements de terre et de mouvements sismiques de tout genre.**

㊗ La présente invention concerne une boîte (1) au but d'obvier aux courants d'air, contenant un pendule (2) suspendu à une étagère horizontale, réalisée avec une lame élastifiée (4) par un ressort en spirale (5) ou d'autre type; ce pendule (2), quand il commence à osciller à cause d'un mouvement sismique ondulatoire et qu'il touche une bague métallique (7) entourant sa tige verticale, ferme un circuit électrique d'excitation d'un relais (10), lequel, quand il se déclenche, provoque l'envoi du courant d'une batterie (13) rechargeable, incorporée dans la boîte (1) susdite, à un signal lumineux d'alarme (11), comme par exemple une lampe placée sur la boîte, et, simultanément, à un dispositif d'alarme acoustique (12) aussi, placé à côté du premier.

- 1 -

Dispositif d'alarme et signalisation de tremblements de terre et de mouvements sismiques de tout genre.

La présente invention a pour objet un dispositif de signalisation du début d'un mouvement sismique, jetant l'alarme même parmi les personnes distraites ou les dormeurs qui ne perçoivent pas les premières secousses faibles et permettant d'évacuer les édifices et de se sauver dehors.

On rejoint le but décrit grâce au dispositif selon le modèle, constitué par une boîte, au but d'obvier aux courants d'air, contenant un pendule suspendu à une étagère horizontale, réalisée avec une lame élastifiée par un ressort en spirale ou d'autre type; ce pendule, quand il commence à osciller à cause d'un mouvement sismique ondulatoire et qu'il touche une bague métallique entourant sa tige verticale, ferme un circuit électrique d'excitation d'un relais, lequel, quand il se déclenche, provoque l'envoi du courant d'une batterie rechargeable, incorporée dans la boîte susdite, à un signal d'alarme lumineux, comme par exemple une lampe placée sur la boîte, et, simultanément, à un dispositif d'alarme acoustique aussi, placé à côté du premier.

La présence de la lame susdite élastifiée par le ressort susdit permet de rendre le susdit pendule sensible même aux mouvements sussultoires, car l'extrémité de cette lame est posée entre deux contacts, l'un supérieur et l'autre inférieur, permettant, à la suite de la vibration verticale du pendule, de fermer le contact d'excitation du relais, ce qui entraîne conséquemment le déclenchement du système d'alarme visuel et acoustique.

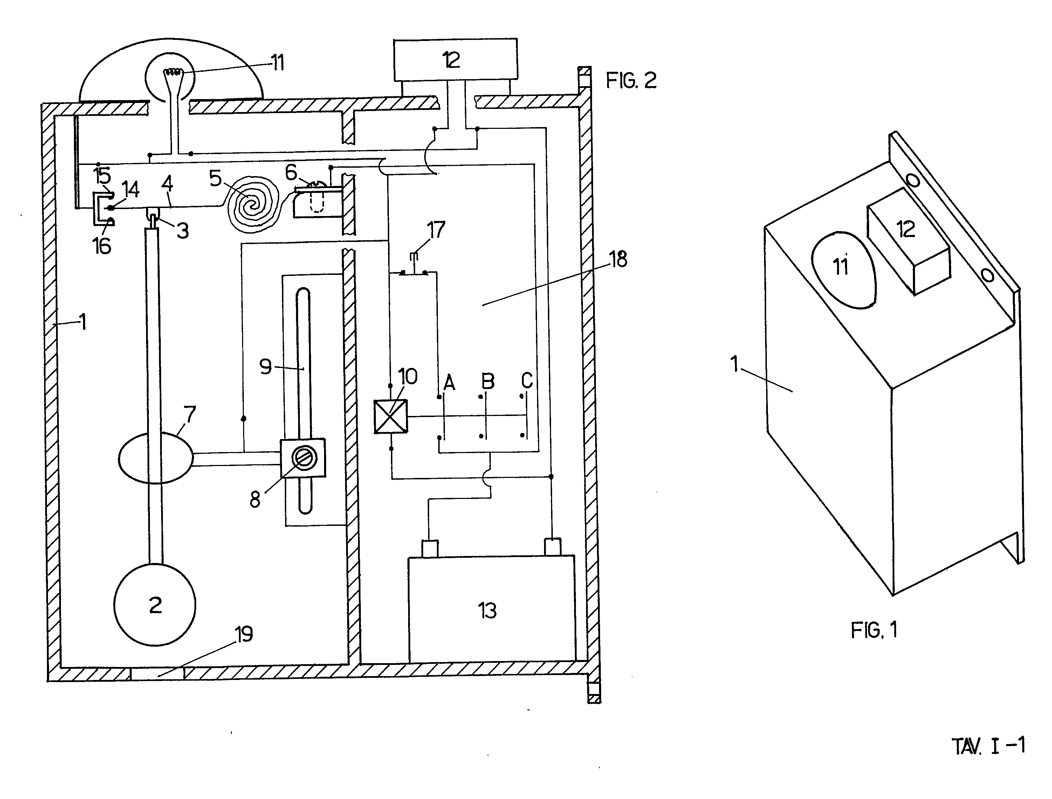

Le modèle est représenté dans une forme d'exemple indicatif et non limitatif, dans la planche de dessins ci-jointe, aux figures 1 et 2.

La fig. 1 est une vue axonométrique extérieure.

La fig. 2 montre une section verticale.

Nous référant aux détails des dessins, on a indiqué la boîte (1) de préférence transparente, contenant le pendule (2) consitué par la tige terminant par une sphère, suspendu en (3) à la lame (4), élastifiée grâce à la présence du ressort (5), fixé par la vis (6) tandis qu'autour de la tige du pendule (2) il y a la bague collectrice en métal (7), fixée par la vis (8), sur la boutonnière verticale (9), et colléguée par les câbles indiqués au relais (10), présentant le contact (A), qui permet de fermer le circuit d'alimentation, de la batterie rechargeable (13), de la lampe d'urgence (11) et de l'avertisseur sonore (12), et les contacts (B) et (C), qu'il faut colléguer au but d'envover la signa lisation d'alarme à d'autres dispositifs éventuels, colloqués par exemple dans d'autres pièces; l'extrémité (14) de la lame (4) est disposée entre les contacts (15) et (16), qui permettent de fermer le circuit du relais (10) à la suite de mouvements sussultoires; la susdite batterie (13), le relais (10) et la touche (17) saillante de préférence à l'extérieur de la boîte (1), au but de débloquer le circuit d'excita tion à la fin de l'urgence, sont logés, selon l'invention, dans un espace séparé (18), de manière qu'ils résultent invisibles à l'extérieur, à travers la surface transparente de la boîte (1), qui comporte aussi le trou inférieur (19), afin de permettre l'introduction d'un doigt et le blocage du pendule (2), s'il devait éventuellement osciller encore à la fin de l'urgence.

Le modèle est caractérisé aussi par le fait qu'il permet le réglage de la sensibilité de relèvement du mouvement sismique oscillatoire, en déplaçant la bague de contact (7), à la suite du desserrage de la vis (8) et du coulissement dans la boutonnière verticale (9) et celle de relèvement du mouvement sussultoire, en rendant variable la distance entre les contacts (15) et (16).

- 3 -

0161378

Il est bien entendu que, tout en restant dans le principe de l'invention, les formes de réalisation, le matériel, les dimensions et les détails d'exécution pourront être amplement modifiés par rapport à ce qui vient d'être décrit et illusté, sans sortir pour cela du cadre de la présente invention.

– 1 –

Revendications

1) Dispositif d'alarme et signalisation de tremblements de terre et de mouvements sismiques de tout genre constitué par une boîte, de préférence transparente, en matériel plastique, afin d'obvier aux courants d'air, contenant un pendule suspendu à une lame élastifiée par un ressort en spirale ou d'un autre type; ce pendule, quand il commence à osciller à cause d'un mouvement sismique ondulatoire et qu'il touche une bague métallique entourant sa tige verticale, ferme un circuit électrique d'excitation d'un relais, lequel, quand il se déclenche, provoque l'envoi du courant d'une batterie rechargeable, incorporée dans la boîte susdite, à un signal lumineux d'alarme, comme par exemple une lampe placée sur la boîte, et, simultanément, à un dispositif d'alarme acoustique aussi, placé à côté du premier.

2) Dispositif d'alarme et de signalisation de tremblements de terre selon la revendication 1), caractérisé par le fait qu'il est sensible même aux mouvements sussultoires, car l'extrémité de cette lame est posée entre deux contacts, l'un supérieur et l'autre inférieur, permettant, à la suite de la vibration verticale du pendule, de fermer le contact d'excitation du relais, ce qui entraîne conséquemment le déclenchement du système d'alarme visuel et acoustique.

3) Dispositif d'alarme et de signalisation de tremblements de terre, selon les revendications précédentes, caractérisé, selon une forme préférée de réalisation, par la présence de la boîte (1) de préférence transparente, contenant le pendule (2) consitué par la tige terminant par une sphère, suspendu en (3) à la lame (4), élastifiée grâce à la présence du ressort (5), fixé par la vis (6), tandis qu'autour de la tige du pendule (2) il y a la bague collectrice (7), fixée par la vis

(8), sur la boutonnière verticale (9), et colléguée, par les câbles indiqués, au relais (10), présentant le contact (A), qui permet de fermer le circuit d'alimentation, de la batterie rechargeable (13), de la lampe d'urgence (11) et de l'avertisseur sonore (12), et les contacts (B) et (C), qu'il faut colléguer au but d'envoyer la signalisation d'alarme à d'autres dispositifs éventuels, colloqués par exemple dans d'autres pièces; l'extrémité (14) de la lame (4) est disposée entre les contacts (15) et (16), qui permettent de fermer le circuit du relais (10) à la suite de mouvements sussultoires; la susdite batterie (13), le relais (10) et la touche (17) saillante à l'extérieur de la boîte (1), au but de débloquer le circuit d'excitation à la fin de l'urgence, sont logés, selon l'invention, dans un espace séparé (18), de manière qu'ils résultent invisibles à l'extérieur, à travers la surface transparente de la boîte (1), qui comporte aussi le trou inférieur (19), afin de permettre l'introduction d'un doigt et le blocage du pendule (2), s'il devait éventuellement osciller encore à la fin de l'urgence.

4) Dispositif d'alarme et de signalisation de tremblements de terre selon la revendication 3), caractérisé par le fait qu'il permet le réglage de la sensibilité de relèvement du mouvement sismique oscillatoire, en déplaçant la bague de contact (7), à la suite du desserrage de la vis (8) et du coulissement dans la boutonnière verticale (9) et celle de relèvement du mouvement sussultoire, en rendant variable la distance entre les contacts (15) et (16).

TAV. I -1

FIG. 1

FIG. 2

Office européen
des brevets

**RAPPORT DE RECHERCHE EUROPEENNE**

0 161 378

Numéro de la demande

EP 84 83 0150

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-2 730 518 (P. OBERMANN) <br> * Revendications; figure 2 * | 1 | G 01 V 1/18 |
| A | | 3 | |
| | --- | | |
| A | DE-A-2 820 244 (OKI ELECTRIC INDUSTRIE CO.) | | |
| | --- | | |
| A | AT-B- 347 706 (Z. KREMENAK) <br> * Revendication 1; figure 1 * | 1,3 | |
| | --- | | |
| A | DE-A-3 014 259 (H.G. MÖLLENHOFF) | | |
| | ----- | | |

**DOMAINES TECHNIQUES RECHERCHES (Int. Cl.4)**

G 01 V
G 08 B

*Le présent rapport de recherche a été établi pour toutes les revendications*

| Lieu de la recherche | Date d'achèvement de la recherche | Examinateur |
|---|---|---|
| BERLIN | 05-12-1984 | BEYER F |